Europäisches Patentamt

European Patent Office

Office européen des brevets

(19)

(11) Veröffentlichungsnummer: **0 208 892 B1**

(12) **EUROPÄISCHE PATENTSCHRIFT**

(45) Veröffentlichungstag der Patentschrift: **27.02.91**

(21) Anmeldenummer: **86107565.3**

(22) Anmeldetag: **04.06.86**

(51) Int. Cl.⁵: **G01L 3/10, A01B 71/06, A01B 63/112, A01B 63/06**

(54) **Einrichtung zum Regeln oder Steuern des Antriebs eines an einem landwirtschaftlichen Arbeitsfahrzeug angehängten Arbeitsgeräts.**

(30) Priorität: **12.07.85 DE 3524944**

(43) Veröffentlichungstag der Anmeldung:
**21.01.87 Patentblatt 87/04**

(45) Bekanntmachung des Hinweises auf die
Patenterteilung:
**27.02.91 Patentblatt 91/09**

(84) Benannte Vertragsstaaten:
**DE FR IT**

(56) Entgegenhaltungen:
**EP-A- 0 175 916          WO-A-82/01354**
**DE-A- 2 949 237          DE-A- 3 307 105**
**GB-A- 2 065 897          US-A- 3 313 354**

(73) Patentinhaber: **ROBERT BOSCH GMBH**
**Postfach 50**
**D-7000 Stuttgart 1(DE)**

(72) Erfinder: **Hesse, Horst, Dr. Dipl.-Ing.**
**Auberlenweg 13B**
**D-7000 Stuttgart 1(DE)**

## Beschreibung

Die Erfindung geht aus von einer Einrichtung nach der Gattung des Hauptanspruchs. Aus der US-PS 3 313 354 ist bereits eine Einrichtung zum Regeln des Antriebsmoments einer an einem Schlepper angelenkten Fräse bekannt, deren Antrieb über die Zapfwelle des Schleppers erfolgt und bei der die als Stellgröße benutzte Arbeitstiefe über eine hydraulische Hubwerksregeleinrichtung verstellbar ist. Nachteilig bei dieser Einrichtung ist, daß die Regelgröße über einen rein mechanisch bauenden Drehmomentsensor mit Federn ermittelt wird, der entsprechend aufwendig und teuer baut und mit erheblicher Hysterese arbeitet. Zudem ist der Drehmomentsensor außerhalb des Getriebes an der Zapfwelle angebaut, wo er viel Raum beansprucht und starker Verschmutzung ausgesetzt ist.

Ferner ist aus der DE-OS 29 49 237 eine Einrichtung bekannt, bei der mit Hilfe einer Reibungskupplung eine Verbindung von einer vom Motor des Schleppers angetriebenen Hauptwelle zu einer Antriebswelle für eine Zapfwelle des Schleppers hergestellt wird. Der auf die Kupplungsscheiben der Reibungskupplung einwirkende Maximaldruck ist dabei auf das maximal zu übertragende Drehmoment eingestellt. Zu diesem Zweck sind an der Hauptwelle und an der Antriebswelle Signalgeber angeordnet, die in Wirkverbindung mit einer den Anpreßdruck der Reibungskupplung bestimmenden Stelleinrichtung stehen. Die Einrichtung baut relativ aufwendig und kompliziert und dient lediglich zur Lastbegrenzung an der Zapfwelle.

Ferner ist ein Wirbelstromsensor zur Messung des Drehmoments bekannt. (DE-A1-3307 105) Dieser ist aber bisher nur bei Kraftfahrzeugen zur Bestimmung des Fahrverhaltens benutzt worden.

Vorteile der Erfindung

Die erfindungsgemäße Einrichtung mit den Merkmalen des Hauptanspruchs hat demgegenüber den Vorteil, daß ohne zusätzlichen Raumbedarf in relativ einfacher und geschützter Weise das Drehmoment der Zapfwelle als Regelgröße feststellbar ist, so daß das Antriebsdrehmoment des Arbeitsgeräts im Regelkreis möglichst konstant gehalten wird, wodurch der Motor mit Vollast betrieben werden kann, ohne daß die Gefahr des Abwürgens besteht. Bei den meisten vorhandenen Getrieben ist der Wirbelstromsensor innerhalb des Getriebegehäuses am Zapfwellenausgang einbaubar, so daß außerhalb des Getriebes an der Zapfwelle ungehindert zusätzliche Arbeitsgeräte anschließbar sind. Zudem erweist sich der Wirbelstromsensor als unempfindlich gegenüber Getriebeöl. Das Drehmoment kann ohne zusätzliche Reibungskupplung übertragen und begrenzt werden. Ferner ist die Einrichtung unempfindlich gegen Temperatur und Verschmutzung und dadurch für den rauhen Einsatz bei landwirtschaftlichen Arbeitsfahrzeugen geeignet. Die Meßfehler sind ge-ring. Es sind auch kleine Drehmomente gut erfaßbar.

Durch die in den Unteransprüchen aufgeführten Maßnahmen sind vorteilhafte Weiterbildungen und Verbesserungen der im Hauptanspruch angegebenen Einrichtung möglich. Besonders vorteilhaft ist eine Ausbildung nach Anspruch 2 in Verbindung mit Anspruch 3, da die Verwendung einer elektrohydraulischen Hubwerksregeleinrichtung und die Verarbeitung des Lageeinflusses eine besonders vorteilhafte Kombination ermöglicht, wodurch der Regelkreis stabilisiert wird und eine gleichmäßigere Arbeitstiefe erzielt wird. Äußerst zweckmäßig ist eine Ausgestaltung nach Anspruch 4, wodurch schwierige Betriebsbedingungen wie sandige Böden, Schlammlöcher und Anfahrvorgänge besser beherrschbar sind und ein Festfahren bei unterschiedlichen Betriebsbedingungen besonders wirksam verhindert wird.

Zeichnung

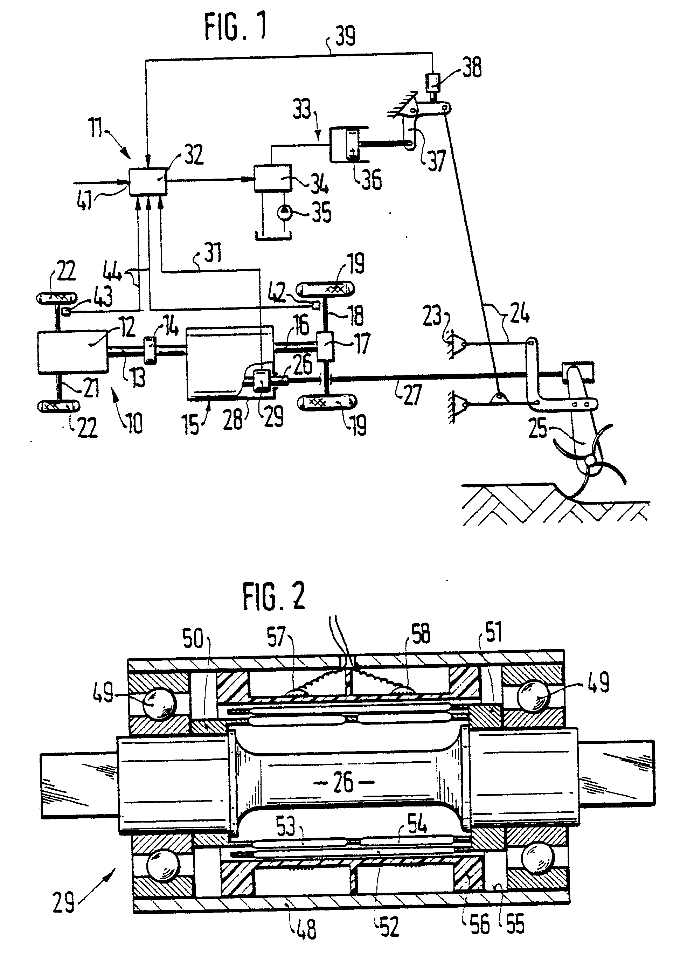

Ein Ausführungsbeispiel der Erfindung ist in der Zeichnung dargestellt und in der nachfolgenden Beschreibung näher erläutert. Es zeigen Figur 1 eine Einrichtung zum Regeln oder Steuern des Antriebs eines an einem landwirtschaftlichen Arbeitsfahrzeug angehängten Arbeitsgeräts in stark vereinfachter Darstellung und Figur 2 einen Längsschnitt durch einen Wirbelstromsensor nach Figur 1.

Beschreibung des Ausführungsbeispiels

Die Figur 1 zeigt in stark vereinfachter Form einen Schlepper 10 mit einer Einrichtung 11 zum Regeln des Antriebsdrehmoments eines zapfwellen-getriebenen Anbaugeräts.

Von einem Motor 12 des Schleppers 10 wird über eine Welle 13, eine Kupplung 14, ein Getriebe 15, einen Wellenabschnitt 16 und ein Differential 17 eine Hinterachse 18 angetrieben, auf der die Hinterräder 19 des Scleppers 10 sitzen. An einer Vorderachse 21 sind nicht antriebene Vorderräder 22 gelagert.

An einem Rahmen 23 des Schleppers 10 ist über ein übliches Dreipunktgestänge 24 als Bodenbearbeitungsgerät eine Fräse 25 angebaut. Die Fräse 25 wird von einer Zapfwelle 26 am Getriebe 15 über eine Gelenkwelle 27 angetrieben. Das Getriebe 15 hat ein Gehäuse 28, in dessem Innern ein elektromechanischer Wirbelstromsensor 29 angeordnet ist, der unmittelbar das der Zapfwelle 26 zugeführte Antriebsdrehmoment mißt.

Die Ausgangssignale des Wirbelstromsensors 29 werden über eine elektrische Leitung 31 einem elektronischen Steuergerät 32 zugeführt, das ebenso wie das Dreipunktgestänge 24 Teil einer elektrohydraulischen Hubwerks-Regeleinrichtung 33 ist. Zu dieser Hubwerks-Regeleinrichtung 33 zählt ferner ein elektrohydraulisches Regelventil 34, das vom elektronischen Steuergerät 32 ansteuerbar ist, von einer Pumpe 35 mit Druckmittel versorgt wird und einen Kraftheber 36 steuert, der über einen Hubarm 37 mit dem Dreipunktgestänge 24 in Wirkverbindung steht.

Der Hubarm 37 steht ferner mit einem Lagesensor 38 in Wirkverbindung, dessen Ausgangssignale über eine zweite elektrische Leitung 39 dem elektronischen steuergerät 32 zugeführt werden. Über einen Eingang 41 am elektronischen Steuergerät 32 sind Sollwerte vorgebbar. Ferner ist dem angetriebenen Hinterrad 19 ein erster Drehzahlsensor 42 zugeordnet, über welchen die Antriebsgeschwindigkeit des Schleppers 10 ermittelt wird. Dem nicht angetriebenen Vorderrad 22 ist ein zweiter Drehzahlsensor 43 zugeordnet, mit dem die absolute Geschwindigkeit des Schleppers 10 relativ zum Boden erfaßbar ist. Die Signale beider Drehzahlsensoren 42, 43 werden über dritte elektrische Leitungen 44 dem elektronischen Steuergerät 32 eingegeben, das daraus beispielsweise einen schlupfabhängigen Wert ermittelt und ihn weiterverarbeitet.

Die Figur 2 zeigt einen Längsschnitt durch den Drehmomentsensor 29 nach Figur 1, der nach dem sogenannten Wirbelstrommeßverfahren arbeitet. Er hat ein hülsenförmiges Gehäuse 48, das mit Hilfe von Kugellagern 49 auf der Zapfwelle 26 gelagert ist. Die Zapfwelle 26 ist im Bereich des Sensor-Gehäuses 48 als Torsionswelle ausgebildet. Innerhalb des Gehäuses 48 sind auf der Zapfwelle 26, sich jeweils an die Kugellager 49 anschließend, eine innere und eine äuß Schlitzhülse 50 bzw. 51 angeordnet. Die äußere Schlitzhülse 51 weist in Längsrichtung eingefräste Schlitze 52 auf. Bei der inneren Schlitzhülse 50 sind Schlitzreihen 53 und 54 ausgebildet, die jeweils um eine Schlitzbreite zueinander versetzt sind. Sie verlaufen ebenfalls in Längsrichtung der inneren Schlitzhülse 50, wobei ihre Länge etwa der halben Länge der Schlitze 52 der äußeren Schlitzhülse 51 entsprechen. Konzentrisch zu den beiden Schlitzhülsen 50, 51 befindet sich an der Innenwand 55 des Gehäuses 48 ein Spulenkörper 56, auf dem zwei Spulen 57, 58 angeordnet sind.

Die Wirkungsweise der Einrichtung 11 wird wie folgt erläutert, wobei auf die Figur 1 und 2 Bezug genommen wird.

Im Betrieb wird bei fahrendem Schlepper 10 von dem vom Motor 12 erzeugten Drehmoment im Getriebe 15 ein Antriebsdrehmoment auf die Zapfwelle 26 abgezweigt und zum Antrieb der Fräse 25 benutzt. Das von der Zapfwelle 26 übertragene Drehmoment ist im wesentlichen abhängig von der Arbeitstiefe der Fräse 25 im Boden. Diese Arbeitstiefe ist abhängig von der Höhenlage der Fräse 25 relativ zum Schlepper 10, wobei die Höhenlage mit Hilfe der elektrohydraulischen Hubwerks-Regeleinrichtung 33 verstellbar ist.

Das von der Zapfwelle 26 zum Antrieb der Fräse 25 übertragene Drehmoment wird vom Wirbelstromsensor 29 gemessen. Hierbei wird die Zapfwelle 26 im Bereich des Gehäuses 48 des Wirbelstromsensors 29 leicht tordiert. Dadurch wird eine Schlitzreihe 53 der inneren Schlitzhülse 50 durch die äußere Schlitzhülse 51 überdeckt, während die andere Schlitzreihe 54 der inneren Schlitzhülse 50 sich öffnet, und umgekehrt. Dadurch wird in den beiden Spulen 57, 58 ein gegensinniges Meßsignal erzeugt, das in einer nicht dargestellten, an sich bekannten Halbbrückenschaltung zu einem doppelten Ausgangssignal führt. Durch die Verwendung zweier Spulen 57, s8 ist eine besonders genaue und störunempfindliche Messung möglich. Alle gegensinnigen Einflüsse durch Temperatur und Störfelder werden kompensiert. Dieses Ausgangssignal des Wirbelstromsensors 29 wird über die Leitung 31 dem elektronischen Steuergerät 32 zugeführt. Das drehmomentabhängige Signal wird im steuergerät 32 verstärkt und mit einem am Eingang 41 eingegebenen Sollwert verglichen. Als Sollwert 41 kann z.B. ein bestimmtes Drehmoment vorgewählt werden, mit dem die Fräse 25 angetrieben werden soll. Das elektronische Steuergerät 32 bildet bei Abweichungen zwischen Soll- und Istwert ein Differenzsignal, welches nach Größe und Richtung das Regelventil 34 so steuert, daß durch Änderung der Arbeitstiefe der Fräse 25 mit Hilfe der Hubwerks-Regeleinrichtung 33 die Regelabweichung zu Null wird. Ist z.B. das vom Wirbelstromsensor 29 gemessene Drehmoment größer als der eingestellte Sollwert, so wird die elektrohydraulische Hubwerks-Regeleinrichtung 33 die Fräse 25 so weit ausheben, bis sich durch verringerte Arbeitstiefe das Antriebsdrehmoment der Fräse 25 verringert und damit ein Abgleich erzielt wird. Ermittelt der Wirbelstromsensor 29 im umgekehrten Falle ein zu kleines Drehmoment in der Zapfwelle 26, so wird über die Hubwerks-Regeleinrichtung 33 die angelenkte Fräse 25 gesenkt und damit deren Arbeitstiefe erhöht, wodurch auch deren Antriebsdrehmoment steigt. Auf diese Weise kann das Antriebsdrehmoment in der Zapfwelle 26 und damit für das Anbaugerät 25 konstant gehalten werden, so daß der Motor 12 mit Vollast betrieben werden kann, ohne daß die Gefahr des Abwürgens besteht, wie dies insbesondere bei wechselnden Bodenbeschaffenheit auftreten kann.

Neben der beschriebenen Regelung des Drehmoments in der Zapfwelle 26 wird zusätzlich vom Lagesensor 38 ein lageabhängiges Signal ermittelt und dem elektronischen Steuergerät 32 eingegeben. Diese Lagesignale sind ebenfalls ein Maß für die Arbeitstiefe der Fräse 25 und können vom elektronischen Steuergerät 32 in beliebiger Weise mit den drehmomentabhängigen Signalen gemischt oder kombiniert werden. Durch den Lageeinfluß kann bei der Drehmomentregelung erreicht werden, daß die Regeleinrichtung stabiler arbeitet und die Arbeitstiefe des Anbaugerätes in größerem Maße konstant gehalten wird.

Ferner wird über die Drehzahlsensoren 42 und 43 eine schlupfabhängige Größe erfaßt und im elektronischen Steuergerät 32 verarbeitet.Der Einfluß dieser schlupfabhängigen Signale kann sowohl mit dem drehmomentabhängigen Signalen allein oder in Verbindung mit dem Lageeinfluß kombiniert werden. Der zusätzliche Einfluß der Schlupfregelung kann dazu benutzt werden, um schwierige Betriebsverhältnisse besser zu beherrschen. Insbesondere kann durch diesen kombinierten Schlupfeinfluß verhindert werden, daß der Schlepper 10 beim Bearbeiten von sandigen Bodenabschnitten, beim Durchfahren von Schlammlöchern oder auch beim Anfahren steckenbleibt, so daß insgesamt seine Schlagkraft erhöht wird.

Selbstverständlich ist es möglich an der gezeigten Einrichtung Änderungen vorzunehmen, ohne von der beanspruchten Erfindung abzuweichen. Anstelle der gezeigten Fräse können auch andere Anbaugeräte verwendet werden, bei denen vergleichbare Verhältnisse auftreten. Die aufgezeigte Drehmomentregelung an der Zapfwelle 26 in Verbindung mit dem Lageeinfluß stellt eine besonders vorteilhafte Kombination dar. Auch kann anstelle des Drehzahlsensors 43 ein anderer Absolutgeschwindigkeitssensor, wie z.B. ein Radarsensor, verwendet werden.

## Ansprüche

1. Einrichtung (11) zum Regeln oder Steuern des Antriebs eines an einem landwirtschaftlichen Arbeitsfahrzeug, insbesondere einem Schlepper (10), angehängten Arbeitsgeräts (25), das über ein hydraulisch betätigbares Hubwerk (24) in der Höhenlage verstellbar am Arbeitsfahrzeug (10) angelenkt ist, wobei zum Regeln oder Steuern das zwischen einem Getriebe (15) des Arbeitsfahrzeugs (10) und dem Arbeitsgerät (25) von einem Drehmomentsensor (29) an einer Zapfwelle (26) gemessene Antriebsdrehmoment benutzt wird, dadurch gekennzeichnet, daß der Drehmomentsensor als Wirbelstromsensor (29) ausgebildet ist und der Wirbelstromsensor (29) im Gehäuse (28) des Getriebes (15) angeordnet ist.

2. Einrichtung nach Anspruch 1, dadurch gekennzeichnet, daß das Hubwerk (33) ein elektronisches Steuergerät (32) aufweist, das mit dem Wirbelstromsensor (29) in Wirkverbindung (31) steht und dem insbesondere Sollwerte (41) für verschiedene Arbeitsvorgänge eingebbar sind.

3. Einrichtung nach Anspruch 2,dadurch gekennzeichnet, daß sie einen die Lage des Hubwerks (24) bzw. des Arbeitsgeräts (25) aufnehmenden Lagesensor (38) aufweist, der mit dem elektronischen Steuergerät (32) in Wirkverbindung steht.

4. Einrichtung nach einem der Ansprüche 1 bis 3, dadurch gekennzeichnet, daß sie einen den Schlupf des Arbeitsfahrzeugs (10) oder einen eine davon abhängige Größe ermittelnden Sensor (42, 43) aufweist, dessen Signale zur Regelung und/oder Begrenzung der Höhenlage des Hubwerks (24) herangezogen werden.

5. Einrichtung nach einem der Ansprüche 1 bis 4, dadurch gekennzeichnet, daß der Drehmomentsensor (19) ein hülsenförmiges Gehäuse (48) hat, das mit Hilfe von Lagern (49) auf der Zapfwelle (26) des Arbeitsfahrzeugs (10) angeordnet ist, daß der Sensor (29) zwei radial zueinander bewegliche Hülsen (50 51) hat, von denen die erste Hülse (51) Längsschlitze (52) aufweist und die zweite Hülse (50) zwei Reihen von Längsschlitzen (53, 54) hat, die um eine Schlitzbreite zueinander versetzt sind, unddaß im Bereich der Längsschlitze (52, 53, 54) der beiden Hülsen (50, 51) wenigstens eine Spule (57) mit einem Spulenkörper (56) angeordnet ist.

6. Einrichtung nach Anspruch 5, dadurch gekennzeichnet, daß die Längsschlitze (52, 53, 54) der beiden Hülsen (50, 51) gleich breit sind.

## Claims

1. Device (11) for regulating or controlling the drive of an implement (25) which is attached to an agricultural working vehicle, in particular a tractor (10) and is coupled to the working vehicle (10) in such a way that it can be adjusted in its vertical position via a hydraulically actuable lifting gear (24), the driving torque measured between a transmission (15) of the working vehicle (10) and the implement (25) by a torque sensor (29) on a power take-off shaft (26) being used for regulation or control, characterized in that the torque sensor is designed as an eddy current sensor (29) and the eddy current sensor (29) is arranged in the housing (28) of the transmission (15).

2. Device according to Claim 1, characterized in that the lifting gear (33) has an electronic control device (32) which is in effective connection (31) with the eddy current sensor (29) and into which setpoint values (41) for various operations can, in particular, be input.

3. Device according to Claim 2, characterized in that it has a position sensor (38) which records the position of the lifting gear (24) or implement (25) and is in effective connection with the electronic control device (32).

4. Device according to one of Claims 1 to 3, characterized in that it has a sensor (42, 43) which determines the slip of the working vehicle (10) or a variable dependent thereon and the signals of which are used for regulating and/or limiting the vertical position of the lifting gear (24).

5. Device according to one of Claims 1 to 4, characterized in that the torque sensor (19) has a sleeve-shaped housing (48) arranged with the aid of bearings (49) on the power take-off shaft (26) of the working vehicle (10), in that the sensor (29) has two sleeves (50, 51), which are movable radially relative to one another and of which the first sleeve (51) has longitudinal slots (52) and the second sleeve (50) has two rows of longitudinal slots (53, 54) offset by one slot width relative to one another, and in that at least one coil (57) with a coil form (56) is arranged in the region of the longitudinal slots (52, 53, 54) of the two sleeves (50, 51).

6. Device according to Claim 5, characterized in that the longitudinal slots (52, 53, 54) of the two sleeves (50, 51) are of the same width.

## Revendications

1. Installation pour régler ou commander l'entraînement d'un outil (25) accroché ou porté par un véhicule agricole, notamment un tracteur (10), cet outil étant réglable en hauteur par un moyen de levage (24) à commande hydraulique, par articulation sur le véhicule (10), la régulation ou la commande utilisant le couple moteur mesuré par un capteur de couple (29) sur l'axe de la prise de force (26) entre la transmission (15) du véhicule (10) et l'outil (25), caractérisé en ce que le capteur de couple est un capteur à courant de Foucault (29) et ce capteur (29) est logé dans un boîtier (28) de la transmission (15).

2. Installation selon la revendication 1, caractérisée en ce que le moyen de levage (33) comporte un dispositif de commande électronique (32) qui coopère (31) avec le capteur à courant de Foucault (29) qui reçoit les grandeurs de consigne (41) particulières pour les différentes phases de travail.

3. Installation selon la revendication 2, caractérisée en ce qu'elle comporte un capteur de position (38) qui détecte la position du moyen de levage (24) ou de l'outil (25), capteur qui coopère avec le dispositif de commande électronique (32).

4. Installation selon l'une des revendications 1 à 3, caractérisée en ce qu'elle comporte un capteur (42, 43) déterminant le glissement du véhicule (10) ou une grandeur dépendant de ce glissement et dont les signaux sont utilisés pour régler/ou limiter la hauteur du moyen de levage (24).

5. Installation selon l'une des revendications 1 à 4, caractérisée en ce que le capteur de couple (19) comporte un boîtier (48) en forme de douille qui est monté à l'aide de paliers (49) sur l'axe de la prise de force (26) du véhicule (10), le capteur (29) comporte deux douilles (50, 51) mobiles radialement l'une par rapport à l'autre, la première douille (51) ayant des fentes longitudinales (52) et la seconde douille (50) ayant deux rangées de fentes longitudinales (53, 54) qui sont décalées respectivement d'une largeur de forme et ce qu'au niveau des fentes longitudinales (52, 23, 54) des deux douilles (50, 51) il est prévu au moins une bobine (57) avec un corps de bobine (56).

6. Installation selon la revendication 5, caractérisée en ce que les fentes longitudinales (52, 53, 54) des deux douilles (50, 51) ont la même largeur.

## FIG. 1

## FIG. 2